# FASCICULE DE BREVET EUROPEEN

(11) **EP 2 783 440 B1**
(45) Date de publication et mention de la délivrance du brevet: **31.08.2016**
(21) Numéro de dépôt: 12813399.8
(22) Date de dépôt: 21.11.2012
(51) Int. Cl.: H02H 1/00, H02H 3/027, H02H 3/033, H02H 3/08, H02H 3/093, H02H 3/02

(54) **DISPOSITIF ET PROCÉDÉ DE PROTECTION CONTRE UN ARC ÉLECTRIQUE**
VORRICHTUNG UND VERFAHREN ZUM SCHUTZ VOR EINEM LICHTBOGEN
DEVICE AND METHOD FOR PROTECTION FROM AN ELECTRIC ARC

(30) Priorité: 22.11.2011 FR 1103544
(43) Date de publication de la demande: 01.10.2014
(73) Titulaire: Schneider Electric Industries SAS, 92500 Rueil-Malmaison (FR)
(72) Inventeur: RIVAL, Marc, F-38330 Saint Ismier (FR)
(74) Mandataire: Talbot, Alexandre
(86) Numéro de dépôt international: PCT/FR2012/000478
(87) Numéro de publication internationale: WO 2013/076388

(56) Documents cités:
- DE-A1- 19 952 507
- DE-A1-102009 031 647
- US-A1- 2008 239 592

## Description

### Domaine technique de l'invention

La présente invention se rapporte au domaine de la protection contre les arcs électriques, tels que les arcs internes, qui peuvent se produire dans les installations électriques, par exemple entre deux phases. Plus précisément, l'invention est relative à un dispositif de protection contre un arc électrique dans une installation électrique.

L'invention concerne également un procédé de protection contre un arc électrique dans une installation électrique.

### État de la technique

Un arc électrique s'accompagne d'une libération d'une grande quantité d'énergie en un temps très bref. La puissance libérée l'est notamment sous forme de chaleur et sous forme d'une explosion génératrice d'une onde de choc dans l'air. Parfois importants, ses effets sont à la fois destructeurs pour les matériels et dangereux pour les personnels, parfois avec des niveaux très élevés de gravité de blessure, même lorsque l'arc électrique générateur de la puissance libérée est un arc interne.

Les arcs électriques dans les installations triphasées de basse, moyenne et haute tension sont plus fréquent qu'on ne le pensait auparavant. Or, parmi les blessures causées par les arcs électriques, en particulier par leur rayonnement de chaleur et/ou par leur onde de choc, figurent des brûlures au troisième degré, des pertes auditives, des pertes visuelles, des endommagements du système nerveux et/ou des arrêts cardiaques. Malheureusement, on déplore même des accidents mortels consécutifs à des arcs électriques.

Par ailleurs, on sait que les effets néfastes d'un arc électrique sont d'autant plus atténués que celui-ci est vite interrompu. C'est pourquoi, compte tenu de la gravité que ces effets peuvent avoir, la protection contre les arcs électriques s'est principalement voire exclusivement intéressée à l'obtention de performances élevées en termes de vitesse de réaction et/ou aux dispositifs susceptibles d'atteindre ces performances dans l'établissement d'un court-circuit d'extinction d'un arc. Parmi les documents témoignant de l'intérêt suscité par de tels dispositifs, on peut citer les demandes de brevet européen EP-1 048 100 et EP-2 073 229, ainsi que le brevet US-7,633,730 et la demande de brevet US-2008/0239598 des Etats-Unis d'Amérique.

A l'heure actuelle, l'extinction de l'arc ne tient pas compte des spécificités de cet arc. Elle est toujours obtenue par un court-circuit accompagné d'une coupure de l'alimentation électrique, laquelle doit être ensuite remise en service par un opérateur, après une durée suffisamment importante pour se traduire par une interruption de service conduisant à l'arrêt des équipements affectés par la coupure d'alimentation.

Le document DE 19952507 divulgue un dispositif de réalisation de court-circuit afin de modifier les conditions de maintien de l'arc électrique.

Le document US2008/023592 décrit un dispositif de limitation du courant lors de l'occurrence d'un arc électrique. Lorsqu'un arc électrique est détecté, une temporisation est déclenchée et la recherche de l'arc électrique est de nouveau effectuée à la fin de la temporisation. Si l'arc électrique est détecté à la fin de la temporisation, une action est réalisée pour éliminer l'arc électrique.

Le document DE 102009031647 décrit un dispositif de limitation du courant lors de l'occurrence d'un arc électrique. Le dispositif comporte un court-circuiteur configuré pour court-circuiter les lignes d'alimentation. Le court-circuiteur est maintenu tant que la tension dans le système basse-tension est supérieure à la tension de démarrage d'un arc électrique.

### Objet de l'invention

L'invention a au moins pour but de perfectionner le traitement d'un arc électrique accidentel.

Selon l'invention, ce but est atteint grâce à un dispositif de protection du type précité qui comprend un appareil de coupure dudit court-circuit à l'issue d'une temporisation prédéfinie de court-circuit à compter de l'instant d'établissement de ce court-circuit.

Le dispositif de protection selon l'invention peut incorporer une ou plusieurs autres caractéristiques avantageuses, isolément ou en combinaison, en particulier parmi celles définies ci-après.

Avantageusement, le dispositif de protection contre un arc électrique comprend :
- au moins un appareil de détection de l'arc électrique,
- au moins un court-circuiteur d'établissement d'un court-circuit d'extinction de l'arc électrique, et
- une unité électronique de commande du court-circuiteur vers un état d'établissement dudit court-circuit en cas de détection de l'arc électrique par l'appareil de détection,
- un appareil de coupure dudit court-circuit à l'issue d'une temporisation prédéfinie de court-circuit à compter de l'instant d'établissement de ce court-circuit
- un disjoncteur d'isolation électrique entre l'installation électrique et une source de puissance électrique d'alimentation de cette installation électrique, et
- un système d'actionnement de ce disjoncteur vers un état d'isolation électrique entre l'installation électrique et la source de puissance électrique en cas de détection de l'arc électrique par l'appareil de détection après une durée prédéterminée à compter d'une détection initiale de l'arc électrique, la durée prédéterminée étant supérieure à la temporisation prédéfinie.

Avantageusement, ledit court-circuiteur est un premier court-circuiteur. De préférence, le dispositif de protection contre un arc électrique comprend :
- un deuxième court-circuiteur, qui est un court-circuiteur au moins d'établissement d'un deuxième court-circuit d'extinction de l'arc électrique,
- une unité électronique de commande du deuxième court-circuiteur vers un état d'établissement dudit deuxième court-circuit en cas de détection de l'arc électrique par l'appareil de détection après une durée prédéterminée à compter d'une détection initiale de l'arc électrique.

Avantageusement, l'unité électronique de commande du premier court-circuiteur est également l'unité électronique de commande du deuxième court-circuiteur.

L'invention a également pour objet un procédé de protection du type précité qui comprend une étape dans laquelle :
c) on coupe ledit court-circuit à l'issue d'une temporisation prédéfinie de court-circuit à compter de l'instant auquel on a établi ce court-circuit.
d) , au moins après une durée prédéterminée à compter de l'instant auquel on a initialement détecté l'arc électrique, on surveille une résurgence possible de l'arc électrique dans l'installation électrique,
e) , en cas de détection d'un arc électrique après la durée prédéterminée, on isole l'installation électrique d'une source de puissance électrique d'alimentation de cette installation électrique.

Le procédé selon l'invention peut incorporer une ou plusieurs autres caractéristiques avantageuses, isolément ou en combinaison, en particulier parmi celles définies ci-après. Avantageusement, ladite temporisation prédéfinie de court-circuit est supérieure à 1,5 ms.

Avantageusement, ladite temporisation prédéfinie de court-circuit est inférieure à 20 ms.

Avantageusement, ladite temporisation prédéfinie de court-circuit est comprise entre 3 ms et 6 ms.

Avantageusement, ladite temporisation prédéfinie de court-circuit est de l'ordre de 4 ms.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, parmi lesquels :
- la figure 1 est un schéma électrique d'une installation triphasée reliée à une source de puissance et équipée d'un dispositif de protection contre un arc électrique, conforme à l'invention ;
- la figure 2 est un schéma synoptique de la logique de fonctionnement du dispositif de protection de la figure 1.

### Description d'un mode préférentiel de l'invention

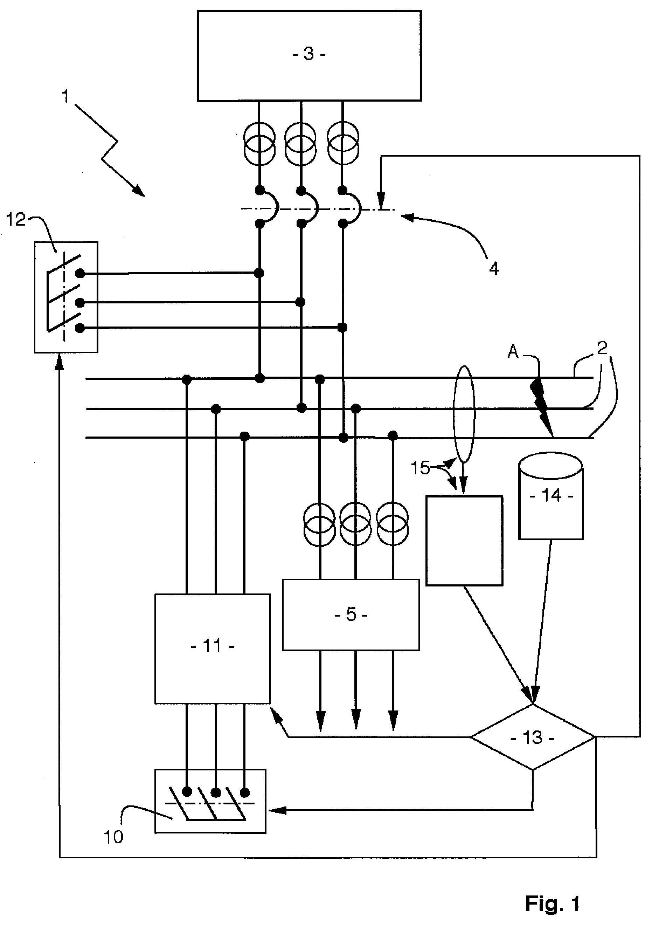

Sur la figure 1, une installation électrique triphasée 1 comprend trois conducteurs d'alimentation 2, dont chacun correspond à une phase et qui sont raccordés à une source triphasée de puissance électrique 3. Un disjoncteur 4 est interposé entre cette source de puissance 3 et les trois conducteurs 2, de manière à pouvoir isoler électriquement la source de puissance 3 en coupant l'alimentation électrique de ces trois conducteurs 2. Le disjoncteur 4 peut être d'un type bien connu, à savoir du type « Disjoncteur Ouvert » (« Air Circuit Breaker » en anglais) encore désigné par l'acronyme DOU (« ACB » en anglais).

Plusieurs appareils ou dispositifs sont raccordés aux conducteurs d'alimentation 2, par exemple à l'intérieur d'une armoire non schématisée dans un souci de clarté. Parmi ces appareils figurent une ou plusieurs charges 5. Dans l'exemple de la figure 1, une seule charge 5 est représentée, toujours dans un souci de clarté.

Constitutif d'un dispositif de protection conforme à l'invention et prévu contre les arcs électriques accidentels, un court-circuiteur 10 est également raccordé aux trois conducteurs d'alimentation 2, de manière à pouvoir établir un court-circuit entre ces trois conducteurs 2, c'est-à-dire entre les trois phases, pour éliminer un tel arc électrique en cas de besoin. Son raccordement est réalisé plus précisément par l'intermédiaire d'un appareil de coupure 11, qui fait également partie du dispositif de protection et qui est interposé entre les conducteurs d'alimentation 2, d'une part, et le court-circuiteur 10, d'autre part.

De la sorte, cet appareil de coupure 11 est à même de couper un court-circuit réalisé par le court-circuiteur 10, c'est-à-dire de rétablir l'isolation électrique entre les conducteurs d'alimentation 2. De préférence, il s'agit d'un disjoncteur du type « Disjoncteur Boîtier Moulé» (« Molded Case Circuit Breaker » en anglais) encore désigné par l'acronyme DBM (« MCCB » en anglais). Des exemples préférés de disjoncteur pouvant être employés comme appareil de coupure 11 sont décrits dans la demande de brevet français FR-2 891 082 et dans le brevet US-6,317,019 des Etats-Unis d'Amérique. Des dispositifs autres qu'un disjoncteur peuvent réaliser la fonction de coupure de l'appareil 11. Par exemple, un limiteur de courant à actionneur pyrotechnique peut constituer l'appareil de coupure 11.

Dans le mode de réalisation préféré représenté à la figure 1, le court-circuiteur 10 est un premier court-circuiteur dans la mesure où le dispositif de protection contre les arcs électriques comprend un deuxième court-circuiteur, qui est référencé 12.

Comme le court-circuiteur 10, le court-circuiteur 12 est connecté de manière à pouvoir mettre les trois lignes d'alimentation 2 en court-circuit. A l'inverse du court-circuiteur 10 toutefois, il ne peut pas être isolé de ces lignes 2 par l'appareil de coupure 11. Ce court-circuiteur 12 est raccordé en aval du disjoncteur 4 de telle sorte que son action de mise en court-circuit des phases se traduise automatiquement par un déclenchement de ce disjoncteur 4 vers un état d'isolation de la source de puissance électrique 3, c'est-à-dire de déconnexion de l'installation 1 de cette source 3.

Les court-circuiteurs 10 et 12 doivent pouvoir établir un court-circuit en un temps très bref, de préférence inférieur voire égal à une milliseconde et, au plus, de l'ordre de quelques millisecondes. Ils peuvent être semblables ou identiques, par exemple du type du court-circuiteur à actionneur pyrotechnique proposé dans le brevet européen EP-1 048 100. Bien entendu d'autres courts-circuiteurs que celui de ce brevet peuvent être employés, surtout si leurs performances sont encore meilleures. Même si les courts-circuiteurs à actionneur pyrotechnique sont préférés dans une mise en oeuvre de l'invention, d'autres types de court-circuiteur peuvent également être employés sans sortir du cadre de l'invention.

Les courts-circuiteurs 10 et 12 sont pilotés par une unité électronique de commande 13 à même d'effectuer une surveillance et de conduire une succession d'étapes logiques. Cette unité électronique de commande 13 peut également piloter le disjoncteur 4, ce qui est le cas dans le mode de réalisation de la figure 1.

Un ou plusieurs appareils complémentaires de détection d'un arc électrique sont reliés à l'unité électronique 13, à laquelle ils fournissent continument ou régulièrement des valeurs fonctions de leurs mesures et/ou de leur détection ou de leur absence de détection d'un arc. Dans l'exemple représenté à la figure 1, ces appareils de détection sont au nombre de deux et sont complémentaires, pour de plus grandes rapidité et/ou fiabilité de détection. Plus précisément, ce sont un capteur optique 14 et un ensemble 15 de capteurs de courant dans les conducteurs d'alimentation 2.

Le capteur optique 14 a pour fonction de détecter le flash ou éclat de lumière produit par un éventuel arc électrique. Des capteurs capables de détecter de tels flashs sont bien connus. Des exemples de tels capteurs peuvent être trouvés dans la demande de brevet européen EP-0 575 932 ou dans le brevet US-4,369,364 des Etats-Unis d'Amérique.

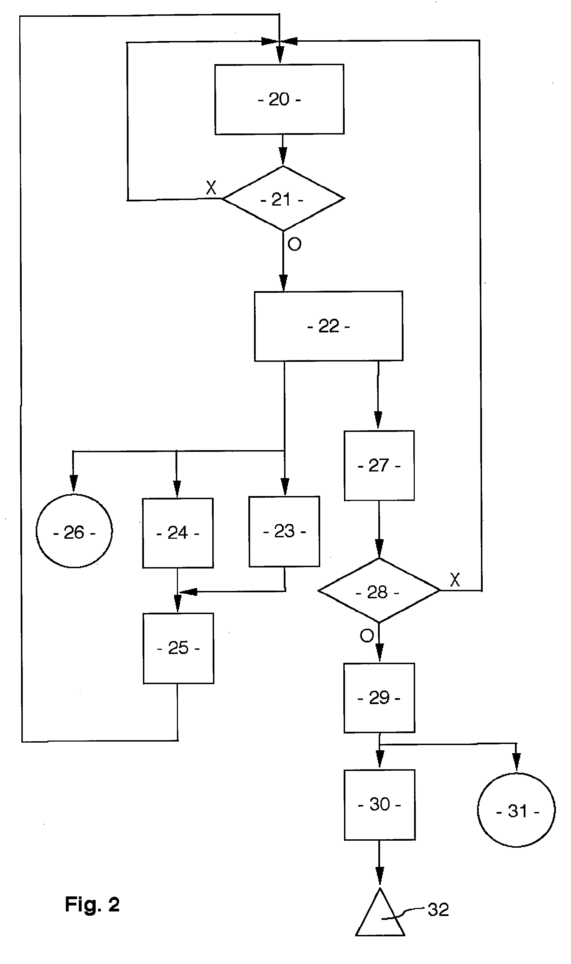

La figure 2 illustre un fonctionnement avantageux du dispositif de protection de l'installation triphasée 1, tel que ce fonctionnement est piloté par l'unité électronique de commande 13.

Dès que l'installation triphasée 1 est sous tension, l'unité électronique de commande 13 réalise une surveillance 20 en analysant continument ou régulièrement les données qu'elle reçoit du capteur optique 14 et de l'ensemble de capteurs de courant 15. Cette surveillance 20 a pour but de détecter un éventuel arc électrique dans l'installation triphasée 1.

A une étape d'interrogation 21, l'unité électronique de commande 13 utilise son analyse des données en provenance des appareils de détection 14 et 15 pour déterminer l'occurrence ou non d'un arc électrique, c'est-à-dire pour répondre à la question de savoir si un arc électrique se produit. Si elle répond par la négative X à cette question, l'unité électronique de commande 13 continue sa surveillance normalement.

La figure 1 illustre le cas d'une occurrence d'un arc électrique accidentel, qui est désigné par la référence A. Dans un tel cas, comme ceci est schématisé à la figure 2, l'unité électronique de commande 13 répond par l'affirmative O à la question qu'elle se pose à l'étape d'interrogation 21. En d'autres termes, elle décide qu'il y a eu une détection 22 d'un arc, ce qui l'amène à déclencher plusieurs actions.

L'une de ces actions est l'émission d'un ordre, qui est à destination du court-circuiteur 10 et qui lui commande l'établissement 23 d'un court-circuit d'extinction de l'arc électrique A. A réception de cet ordre, le court-circuiteur 10 passe d'un état ouvert à un état fermé, dans lequel les trois conducteurs d'alimentation 2 sont connectés électriquement les uns aux autres et avantageusement mis également à la terre. Le court-circuit en résultant réduit sinon annule les différences de potentiel entre les conducteurs d'alimentation 2, ce qui conduit à une extinction de l'arc électrique A.

Cet arc électrique A peut avoir une cause fugitive. Après que cette cause a disparu, l'arc électrique A perdure généralement sinon toujours en l'absence d'instauration d'un court-circuit, car il ionise localement l'air de manière à générer un chemin conducteur entre les conducteurs 2, là où il se produit. Une fois ce chemin conducteur créé, l'arc électrique A l'emprunte et il continue de l'emprunter même après la disparition de sa cause première.

Par conséquent, même dans le cas où la cause de l'arc électrique A est passagère, un court-circuit entre les conducteurs d'alimentation 2 est généralement sinon toujours nécessaire pour que cet arc électrique A disparaisse. S'il était maintenu longtemps, par exemple jusqu'à une intervention humaine, ce court-circuit conduirait à ce que la charge 5 soit systématiquement déconnectée de la source de puissance 3 et donc de son alimentation électrique, ce qui peut être inutile et alors préjudiciable dans le cas d'une cause fugitive à l'arc électrique A.

C'est pourquoi une autre action suivant la détection 22 de l'arc A est le déclenchement d'une temporisation 24 qui est décomptée par l'unité électronique de commande 13 et durant toute laquelle le court-circuit entre les conducteurs d'alimentation 2 est maintenu. Cette temporisation est choisie en tenant compte de deux contraintes. La première contrainte est que le court-circuit doit être maintenu assez longtemps pour permettre une régénération suffisante de l'air au niveau du chemin conducteur précité et pour que la conductivité de l'air y soit ainsi suffisamment atténuée. La deuxième contrainte est de réduire autant que faire se peut la période durant laquelle la charge 5 n'est plus correctement alimentée.

La temporisation prédéfinie de court-circuit 24 est avantageusement supérieure à 1,5 ms, avantageusement inférieure à 20 ms, de préférence comprise entre 3 ms et 6 ms et, de manière sensiblement optimale, de l'ordre de 4 ms.

En variante, la temporisation 24 peut être décomptée par le dispositif de coupure 11 et non par l'unité électronique de commande 13. Bien qu'elle existe toujours dans ce cas, cette temporisation 24 ne fait plus partie des étapes que l'unité électronique de commande 13 pilote parmi les étapes de la logique de fonctionnement représentée à la figure 2.

Lorsque la temporisation prédéfinie de court-circuit a été entièrement décomptée, l'unité électronique de commande 13 envoie un nouvel ordre qui est de couper, c'est-à-dire d'interrompre, le court-circuit d'extinction de l'arc A, à une étape 25. Ce nouvel ordre est à destination de l'appareil de coupure 11, auquel il commande de se déclencher pour passer de l'état fermé ou passant à un état ouvert de déconnexion du court-circuiteur 10.

Dans le cas de la variante où la temporisation 24 est décomptée par le dispositif de coupure 11, l'interruption du court-circuit d'extinction de l'arc A résulte d'un processus interne à ce dispositif de coupure 11, sans ordre d'interruption en provenance de l'unité électronique de commande 13. Dans ce cas, afin de pouvoir fonctionner de manière autonome à compter de l'établissement 23 du court-circuit d'extinction de l'arc A, le dispositif de coupure 11 peut comprendre un déclencheur commandant son ouverture à l'expiration de la temporisation 24.

Après la coupure du court-circuit à l'étape 25, l'arc électrique A a disparu sans pouvoir se rétablir de lui-même dès lors que sa cause était passagère et a disparu dans l'intervalle. Dans ce cas, l'alimentation électrique de la charge 5 retourne à la normale et il n'y a pas de discontinuité de service, cette charge 5 ayant continué de fonctionner sans devoir être redémarrée une fois l'arc A éteint. Cela est particulièrement intéressant dans les centres de stockage numérique de données (« data center » en anglais), où les interruptions de fonctionnement sont très préjudiciables en pouvant notamment conduire à des pertes parfois irréversibles de données.

Une fois que l'alimentation électrique de la charge 5 a été rétablie, le court-circuiteur 10 et l'appareil de coupure 11 doivent être remis dans leur état initial, afin de pouvoir de nouveau être opérationnels en cas d'un nouvel arc électrique. Une alarme 26 permet de faire savoir à un opérateur que cela doit être fait. L'unité électronique de commande 13 déclenche cette alarme comme une des suites de la détection 22 de l'arc électrique A.

Encore une autre action menée par l'unité électronique de commande 13 suit cette détection 22. Il s'agit du décompte 27 d'une durée prédéterminée à partir de la détection initiale 22 de l'arc électrique A. Cette durée prédéterminée est choisie de manière à effectuer un tri entre les arcs électriques ayant une cause passagère et les autres arcs électriques, qui doivent être traités autrement. En effet, l'unité électronique de commande 13 effectue une étape d'interrogation 28 à la fin de la durée prédéterminée, qui prend fin après la temporisation prédéfinie de court-circuit. Cette étape 28 est identique à l'étape d'interrogation 21 exposée précédemment.

Si elle répond par la négative X à la question de savoir si un arc électrique se produit encore, l'unité électronique de commande 13 revient à sa surveillance normale 20, à l'issue de l'étape d'interrogation 28.

Le cas contraire est celui où l'unité électronique de commande 13 considère que l'étape d'interrogation 28 conclut à la détection 29 d'un arc électrique. Dans ce cas, on considère que cet arc est une résurgence de l'arc électrique A détecté précédemment et que la cause de celui-ci ne doit pas être considérée comme étant passagère. Cela se traduit par le déclenchement de plusieurs actions qui sont pilotées par l'unité électronique de commande 13 et dont une, référencée 30 à la figure 2, est de déconnecter l'installation triphasée 1 de la source de puissance électrique 3.

Dans l'exemple représenté, l'isolation 30 entre la source de puissance électrique 3 et l'installation triphasée 1 résulte de l'un au moins de deux ordres envoyés simultanément par l'unité électronique de commande 13. L'un de ces deux ordres est à destination du disjoncteur 4 et lui commande de se déclencher, c'est-à-dire de passer de l'état fermé ou passant à un état ouvert de déconnexion de l'installation triphasée 1.

L'autre ordre émis par l'unité électronique de commande 13 suite à la détection 29 d'un arc est à destination du court-circuiteur 12 et lui commande l'établissement 23 d'un nouveau court-circuit entre les conducteurs d'alimentation 2. Permanent jusqu'à une intervention humaine de restauration de conditions normales de fonctionnement, ce nouveau court-circuit supprime l'arc résurgent puis en empêche une nouvelle réapparition. Comme il est durable, il provoque également un déclenchement automatique du disjoncteur 4.

En variante, l'unité électronique de commande 13 peut donc n'émettre qu'un seul ordre, celui à destination du court-circuiteur 12. Elle peut également n'émettre que l'ordre à destination du disjoncteur 4.

La déconnexion de l'installation triphasée 1 conduit à son arrêt, c'est-à-dire à la fin de son fonctionnement, ce que symbolise le triangle 32 à la figure 2.

Lorsque le disjoncteur 4 s'est déclenché, un diagnostic de l'installation triphasée 1 doit être effectué avant une remise en marche de celle-ci. Une alarme 31 permet de faire savoir à un opérateur la nécessité de ce diagnostic et d'une remise en marche de l'installation 1. L'unité électronique de commande 13 déclenche cette alarme 31 comme une des suites de la détection d'arc 29.

Il ressort de ce qui précède que le fonctionnement du dispositif de protection contre les arcs électriques dans l'installation triphasée 1 est sélectif en ce qu'il traite différemment les arcs ayant une cause passagère et ceux consécutifs à un défaut durable, tel qu'une anomalie nécessitant une intervention humaine pour être éliminée. Les arcs ayant une cause passagère sont éliminés sans interruption de service, c'est-à-dire d'une manière qui permet une continuité du fonctionnement de la charge 5.

Un exemple de cause passagère d'arc électrique est que, en cours de chute, un objet conducteur tombant touche simultanément deux des conducteurs d'alimentation 2 sans s'y immobiliser.

L'invention ne se limite pas au mode de réalisation décrit précédemment. En particulier, les moyens de transmission d'un ordre de l'appareil électronique de commande 13 au disjoncteur 4 peuvent être supprimés sans sortir du cadre de l'invention. Dans une autre configuration, le court-circuiteur 12 peut l'être également, toujours sans sortir du cadre de l'invention.

## Revendications

1. Dispositif de protection contre un arc électrique (A) dans une installation électrique (1), comprenant :
- au moins un appareil (14, 15) de détection de l'arc électrique,
- au moins un court-circuiteur (10) d'établissement d'un court-circuit d'extinction de l'arc électrique, et
- une unité électronique (13) de commande du court-circuiteur (10) vers un état d'établissement dudit court-circuit en cas de détection de l'arc électrique par l'appareil de détection (14, 15),
- un appareil (11) de coupure dudit court-circuit à l'issue d'une temporisation prédéfinie de court-circuit à compter de l'instant d'établissement de ce court-circuit
- un disjoncteur (4) d'isolation électrique entre l'installation électrique (1) et une source de puissance électrique (3) d'alimentation de cette installation électrique (1),
**caractérisé en ce qu'**il comprend:
- un système (12, 13) d'actionnement de ce disjoncteur (4) vers un état d'isolation électrique entre l'installation électrique (1) et la source de puissance électrique (3) en cas de détection de l'arc électrique par l'appareil de détection (14, 15) après une durée prédéterminée à compter d'une détection initiale de l'arc électrique, la durée prédéterminée étant supérieure à la temporisation prédéfinie.

2. Dispositif de protection selon la revendication 1, **caractérisé en ce que** ledit court-circuiteur est un premier court-circuiteur (10), le dispositif de protection comprenant :
- un deuxième court-circuiteur (12), qui est un court-circuiteur au moins d'établissement d'un deuxième court-circuit d'extinction de l'arc électrique,
- une unité électronique (13) de commande du deuxième court-circuiteur (12) vers un état d'établissement dudit deuxième court-circuit en cas de détection de l'arc électrique par l'appareil de détection (14, 15) après une durée prédéterminée à compter d'une détection initiale de l'arc électrique.

3. Dispositif de protection selon la revendication 2, **caractérisé en ce que** l'unité électronique (13) de commande du premier court-circuiteur (10) est également l'unité électronique (13) de commande du deuxième court-circuiteur (12).

4. Dispositif de protection selon l'une quelconque des revendications précédentes, **caractérisé en ce que** ladite temporisation prédéfinie de court-circuit est supérieure à 1,5 ms

5. Dispositif de protection selon l'une quelconque des revendications précédentes, **caractérisé en ce que** ladite temporisation prédéfinie de court-circuit est inférieure à 20 ms.

6. Dispositif de protection selon les revendications 4 et 5, **caractérisé en ce que** ladite temporisation prédéfinie de court-circuit est comprise entre 3 ms et 6 ms.

7. Dispositif de protection selon la revendication 6, **caractérisé en ce que** ladite temporisation prédéfinie de court-circuit est de l'ordre de 4 ms.

8. Procédé de protection contre un arc électrique (A) dans une installation électrique (1), comprenant des étapes dans lesquelles :
a) on détecte l'arc électrique,
b) on établit un court-circuit d'extinction de l'arc électrique,
**caractérisé en ce qu'**il comprend une étape dans laquelle :
c) on coupe ledit court-circuit à l'issue d'une temporisation prédéfinie de court-circuit à compter de l'instant auquel on a établi ce court-circuit,
d) au moins après une durée prédéterminée à compter de l'instant auquel on a initialement détecté l'arc électrique, on surveille une résurgence possible de l'arc électrique dans l'installation électrique (1),
e) en cas de détection d'un arc électrique après la durée prédéterminée, on isole l'installation électrique (1) d'une source de puissance électrique (3) d'alimentation de cette installation électrique (1).

9. Procédé de protection selon la revendication 8, **caractérisé en ce que** ladite temporisation prédéfinie de court-circuit est supérieure à 1,5 ms.

10. Procédé de protection selon l'une des revendications 8 et 9, **caractérisé en ce que** ladite temporisation prédéfinie de court-circuit est inférieure à 20 ms.

11. Procédé de protection selon les revendications 9 et 10, **caractérisé en ce que** ladite temporisation prédéfinie de court-circuit est comprise entre 3 ms et 6 ms.

12. Procédé de protection selon la revendication 11, **caractérisé en ce que** ladite temporisation prédéfinie de court-circuit est de l'ordre de 4 ms.

## Patentansprüche

1. Vorrichtung zum Schutz gegen einen Lichtbogen (A) in einer elektrischen Anlage (1), umfassend:
- mindestens ein Gerät (14, 15) zum Erkennen des Lichtbogens,
- mindestens einen Kurzschlussschalter (10) zum Aufbau eines Kurzschlusses zum Löschen des Lichtbogens und
- eine elektrische Einheit (13) zur Steuerung des Kurzschlussschalters (10) in Richtung auf einen Zustand des Aufbaus des genannten Kurzschlusses im Falle der Erkennung eines Lichtbogens durch das Erkennungsgerät (14, 15),
- ein Gerät (11) zum Unterbrechen des Kurzschlusses nach einer ab dem Moment des Aufbaus dieses Kurzschlusses vorbestimmten Kurzschlusszeit,
- einen elektrischen Trennschalter (4) zur elektrischen Isolierung der elektrischen Anlage (1) von einer Stromversorgungsquelle (3) dieser elektrischen Anlage (1), **dadurch gekennzeichnet, dass** er umfasst:
- ein System (12, 13) zur Betätigung dieses Trennschalters (4) in Richtung auf einen Zustand, in dem die elektrische Anlage (1) von der Stromquelle (3) im Falle des Erkennens des Lichtbogens durch das Erkennungsgerät (14, 15) nach einer vorgegebenen Zeit ab einer anfänglichen Erkennung des Lichtbogens elektrisch getrennt wird, wobei die vorbestimmte Zeit länger ist als die voreingestellte Verzögerungszeit.

2. Schutzvorrichtung nach Anspruch 1, **dadurch gekennzeichnet, dass** der genannte Kurzschlussschalter ein erster Kurzschlussschalter (10) ist, wobei die Schutzvorrichtung umfasst :
- einen zweiten Kurzschlussschalter (12), der ein Kurzschlussschalter mindestens zum Aufbau eines zweiten Kurzschlusses zum Löschen des Lichtbogens ist,
- eine elektronische Einheit (13) zur Steuerung des zweiten Kurzschlussschalters (12) in Richtung auf einen Zustand des Aufbaus des zweiten Kurzschlusses im Falle der Entdeckung des Lichtbogens durch das Erkennungsgerät (14, 15) nach einer vorgegebenen Zeit ab einer ursprünglichen Erkennung des Lichtbogens.

3. Schutzvorrichtung nach Anspruch 2, **dadurch gekennzeichnet, dass** die elektronische Einheit (13) zur Steuerung des ersten Kurzschlussschalters (10) auch die elektrische Einheit (13) zur Steuerung des zweiten Kurzschlussschalters (12) ist.

4. Schutzvorrichtung nach einem der vorstehenden Ansprüche, **dadurch gekennzeichnet, dass** die genannte vorbestimmte Kurzschlussverzögerungszeit über 1,5 ms liegt.

5. Schutzvorrichtung nach einem der vorstehenden Ansprüche, **dadurch gekennzeichnet, dass** die genannte vorbestimmte Kurzschlussverzögerungszeit unter 20 ms liegt.

6. Schutzvorrichtung nach den Ansprüchen 4 und 5, **dadurch gekennzeichnet, dass** die genannte vorbestimmte Kurzschlussverzögerungszeit 3 bis 6 ms beträgt.

7. Schutzvorrichtung nach Anspruch 6, **dadurch gekennzeichnet, dass** die genannte vorbestimmte Kurzschlussverzögerungszeit etwa 4 ms beträgt.

8. Verfahren zum Schutz gegen einen Lichtbogen (A) in einer elektrischen Anlage (1), umfassend folgende Schritte, in denen:
a) der Lichtbogen erfasst wird,
b) ein Kurzschluss zum Löschen des Lichtbogens aufgebaut wird, **dadurch gekennzeichnet, dass** es einen Schritt umfasst, in dem:
c) der Kurzschluss nach einer ab dem Moment des Aufbaus dieses Kurzschlusses vorbestimmten Kurzschlusszeit unterbrochen wird,
d) ein mögliches Wiederauftreten des Lichtbogens in der elektrischen Anlage zumindest nach einer vorgegebenen Zeit ab dem Moment, in dem der Lichtbogen ursprünglich entdeckt wurde, überwacht wird,
e) die elektrische Anlage (1) im Falle der Entdeckung eines Lichtbogens nach der vorbestimmten Zeit von einer Stromversorgungsquelle (3) dieser elektrischen Anlage (1) getrennt wird.

9. Schutzverfahren nach Anspruch 8, **dadurch gekennzeichnet, dass** die genannte vorbestimmte Kurzschlussverzögerungszeit über 1,5 ms liegt.

10. Schutzverfahren nach einem der Ansprüche 8 und 9, **dadurch gekennzeichnet, dass** die genannte vorbestimmte Kurzschlussverzögerungszeit unter 20 ms liegt.

11. Schutzverfahren nach den Ansprüchen 9 und 10, **dadurch gekennzeichnet, dass** die genannte vorbestimmte Kurzschlussverzögerungszeit 3 bis 6 ms beträgt.

12. Schutzverfahren nach Anspruch 11, **dadurch gekennzeichnet, dass** die genannte vorbestimmte Kurzschlussverzögerungszeit etwa 4 ms beträgt.

## Claims

1. A protection device against an electric arc (A) in an electric installation (1), comprising:
- at least one detection apparatus (14, 15) of the electric arc,
- at least one short-circuiter (10) establishing a short-circuit for extinction of the electric arc, and
- an electronic control unit (13) of the short-circuiter (10) commanding to an established state of said short-circuit in case of detection of the electric arc by the detection apparatus (14, 15),
- a switchgear apparatus (11) for interrupting said short-circuit at the end of a predefined short-circuit time delay from the time this short-circuit is established,
- an electric isolating circuit breaker (4) between the electric installation (1) and an electric power source (3) of this electric installation (1),
**characterized in that** it comprises
- an actuating system (12, 13) of this circuit breaker (4) to an electric isolation state between the electric installation (1) and the electric power source (3) in case of detection of the electric arc by the detection apparatus (14, 15) after a predefined time after initial detection of the electric arc, the predefined time being longer than the predefined time delay.

2. The protection device according to claim 1, **characterized in that** said short-circuiter is a first short-circuiter (10), the protection device comprising:
- a second short-circuiter (12), which is a short-circuiter at least for establishment of a second short-circuit for extinction of the electric arc,
- an electronic control unit (13) of the second short-circuiter (12) commanding to an established state of said second short-circuit in case of detection of the electric arc by the detection apparatus (14, 15) after a predefined time after initial detection of the electric arc.

3. The protection device according to claim 2, **characterized in that** the electronic control unit (13) commanding the first short-circuiter (10) is also the electronic control unit (13) commanding the second short-circuiter (12).

4. The protection device according to any one of the foregoing claims, **characterized in that** said predefined short-circuit time delay is longer than 1.5 ms.

5. The protection device according to any one of the foregoing claims, **characterized in that** said predefined short-circuit time delay is shorter than 20 ms.

6. The protection device according to claims 4 and 5, **characterized in that** said predefined short-circuit time delay is comprised between 3 ms and 6 ms.

7. The protection device according to claim 6, **characterized in that** said predefined short-circuit time delay is about 4 ms.

8. A protection method against an electric arc (A) in an electric installation (1), comprising steps in which:
a) the electric arc (A) is detected,
b) a short-circuit for extinction of the electric arc (A) is established, **characterized in that** it comprises a step in which:
c) said short-circuit is interrupted at the end of a predefined short-circuit time delay as from the time this short-circuit was established.
d) at least after a predefined time as from the time at which the electric arc was initially detected, a possible resurgence of the electric arc (A) in the electric installation (1) is monitored,
e) in case of detection of an electric arc (A) after the predefined time, the electric installation (1) is isolated from an electric power source (3) of this electric installation (1).

9. The protection method according to claim 8, **characterized in that** said predefined short-circuit time delay is longer than 1.5 ms.

10. The protection method according to one of claims 8 to 9, **characterized in that** said predefined short-circuit time delay is shorter than 20 ms.

11. The protection method according to claims 9 and 10, **characterized in that** said predefined short-circuit time delay is comprised between 3 ms and 6 ms.

12. The protection method according to claim 11, **characterized in that** said predefined short-circuit time delay is about 4 ms.
